# EUROPEAN PATENT SPECIFICATION

(11) **EP 0 273 680 B1**
(45) Date of publication and mention of the grant of the patent: **23.04.1997**
(21) Application number: 87311293.2
(22) Date of filing: 22.12.1987
(51) Int. Cl.: B32B 27/32, B32B 27/18

(54) **Sealable plastics film laminate**
Versiegelbarer Kunststoffverbundfilm
Film laminé scellable, en matière plastique

(30) Priority: 02.01.1987 US 12
(43) Date of publication of application: 06.07.1988
(73) Proprietor: MOBIL OIL CORPORATION, New York New York 10017 (US)
(72) Inventor: Balloni, Riccardo, Fairport, NY 14450 (US); Keung, Jay Kin, Macedon, NY 13402 (US); Liestman, David August, Macedon, NY 14502 (US); Nahmias, Alan Michael, Victor, NY 14564 (US)
(74) Representative: Colmer, Stephen Gary

(56) References cited:
- EP-A- 0 194 588
- US-A- 4 293 608
- US-A- 4 419 411

## Description

This invention relates to heat-sealable, multi-layer, oriented plastics film structures.

U.S. Patent 4,419,411 discloses an oriented multi-layer polypropylene film structure comprising coextruded layers of:
(a) a base layer comprising polypropylene of comparatively high stereoregularity, the precursor resin of which contains an amide of a water-insoluble monocarboxylic acid having about 8 to about 24 carbon atoms, and mixtures of said amides;
(b) a skin layer comprising a polyolefin of comparatively low stereoregularity on at least one surface of (a), said skin layer containing a surface-modifying proportion of a combination of finely divided silica and a silicone oil;
the surface of (b) having bloomed thereon a surface-modifying proportion of at least some of the amide of (a).

Such film structures are very satisfactory for most high-speed packaging operations; nevertheless, the present invention seeks to provide film structures with still further improved properties, notably low coefficient of friction; excellent anti-static properties; good optical clarity; and a reduced tendency to adhere together when used in high-speed packaging machinery, especially at locations where heat sealing has occurred.

EP-A-194588 discloses a three layer film structure comprising a core layer made of polypropylene, coated on both sides with heat-sealable polyolefin films.

According, therefore, to the present invention there is provided a heat-sealable, multi-layer, oriented plastics film structure which comprises:
(a) a core layer comprising a crystalline polyolefin, which includes an antistatic additive comprising a glyceride such as glycerol monostearate, both surfaces of which layer are coated, directly or indirectly, with
(b) at least one heat-sealable layer comprising a polyolefin which is a random copolymer and/or terpolymer and an antiblocking agent wherein only one of the external layers (b) contains silicone oil, part of this silicone oil being transferable to the exposed surface of the other external layer following contact of their surfaces in service.

Desirably, the plastics film structure of the invention comprises a core layer both surfaces of which are directly coated each with one heat-sealable layer. The core layer may be coated to form the plastics film structure of the invention by coextruding the layers. Thereafter, the plastics film structure is oriented by uniaxial, or preferably, biaxial deformation.

The preferred crystalline polypropylene is highly crystalline, highly stereoregular polypropylene with a melt flow index (MFI) at 446°F (230°C) from 1 to 25, preferably from 1.5 to 8, especially from 1.5 to 5; a crystalline melting point from 321°F (161°C) to 325°F (163°C); a number average molecular weight from 25,000 to 100,000; and a density from 0.90 to 0.91.

The antistatic additive in the core layer preferably further includes a tertiary amine. It is preferred that the amine is a tertiary amine such as N,N-bis substituted alkyl or alkenyl amines; for example, N,N-bis(2-hydroxyethyl) such amines. It is especially preferred that the tertiary amine is a C₆ to C₁₈ alkyl or alkenyl amine; for example, N,N-bis(2-hydroxyethyl) cocoamine or N,N-bis(2-hydroxyethyl) stearylamine.

It is found that where both a glyceride and an amine, especially a tertiary amine, are present the resulting plastics film structure is resistant to dust pick-up.

The polyolefins of comparatively low stereoregularity comprising the heat-sealable layers are random copolymers; for example, comprising ethylene and propylene residues, and/or terpolymers; for example, comprising ethylene, propylene and butene-1 residues. The copolymers preferably comprise from 2% to 9%, preferably from 2% to 7% and, more preferably, from 3% to 5% by weight of ethylene residues. Particularly preferred copolymers are ethylene-propylene-butene-1 copolymers comprising from 2% to 9%, preferably from 3% to 7%, especially from 4% to 5% by weight of butene-1. Suitable polymers generally have a MFI at 446°F (230°C) from 2 to 15, preferably from 3 to 8; a crystalline melting point from 245° (118°C) to 302°F (150°C); a number average molecular weight from 25,000 to 100,000; and a density from 0.89 to 0.90. The terpolymers have excellent heat seal characteristics. They do not, however, have the excellent physical characteristics inherent in the polypropylene of comparatively high stereoregularity. Thus, the polypropylene of high stereoregularity comprising the core layer possesses the excellent characteristics of good moisture barrier quality, stiffness, high strength and optical properties while the thin, coextruded surface layers of the terpolymers of comparatively low stereoregularity provide excellent heat seal characteristics. To take advantage of these characteristics the skin layers must be modified so as to exhibit the characteristics of good slip and the tendency not to stick to an adjacent film region after being exposed to heat-seal temperatures. At the same time it is desired to avoid additions of amounts of additives which lead to non-uniformity and haze.

It is preferred that each skin layer has a thickness of less than 0.8 microns. So long as the continuity of the film structure is maintained, the minimum thickness of the skin layer is not important.

The antiblocking agent preferred for inclusion in the heat-sealable layers may be any particulate inorganic material, preferably having a mean particle size from 0.5 to 5 microns. One commercially available silica has a mean particle size of 0.75 microns and another has a mean particle size of 4.5 microns and these are found to be very satisfactory. Metal silicates, glasses, clays and other comminuted inorganic materials may also be used. The antiblocking agent preferably comprises from 0.05% to 0.5%, preferably from 0.1% to 0.3% by weight of each of the heat-sealable layers.

Preferably the external layer (b) substantially free from silicone oil is subjected to corona discharge, chemical or flame treatment.

An important component of the plastics film structure of the present invention is the silicone oil. The silicone oil is incorporated into one of the heat-sealable layers in an amount such that low coefficient of friction is maintained on the layer into which it is incorporated and also on the exposed surface of the other heat-sealable layer following contact of their surfaces in service. The silicone oil may comprises from 0.5% to 5.0%, preferably 0.5% to 3% and most preferably 1.1% to 1.5% by weight of the heat-sealable layer.

The plastics film structure of the present invention can be prepared employing commercially available systems for coextruding resins. Thus, a polypropylene homopolymer of comparatively high stereoregularity may preferably be coextruded with an ethylene-propylene random copolymer of comparatively low stereoregularity containing conventional optional components such as wax and also the antiblocking agent. The polymers may be brought to the molten state and coextruded from a conventional extruder through a flat sheet die, the melt streams being combined in an adapter prior to being extruded from the die. After leaving the die orifice, the plastics film structure is quenched; and the quenched structure is then preferably reheated and stretched, typically from 4 to 6 times in the machine direction and subsequently, typically from 4 to 10 times in the transverse direction. The edges of the film may then be trimmed and the film next wound onto a core.

It is preferred that the thus-formed structure be conditioned or equilibrated by holding the same for a period of about 6 hours to 1 week at a temperature from about 80° (27°C) to about 125°F (52°C). The resulting plastics film structure will have a coefficient of friction (COF) from 0.10 to 0.40, preferably from 0.20 to 0.30; for example 0.25, and will not block under conditions of tight winding after being held at temperatures up to 60°C (140°F).

Coefficient of friction (COF) may be determined by the "moving slide-stationary film" method of U.S. Patent No. 3,399,156.

A commercially available homopolymeric polypropylene and several copolymers and their approximate at least melting points are tabulated in the table below:

**TABLE**

| Polymeric Material | Point Range |
|---|---|
| Homopolypropylenes | 321°-325°F (161°C to 163°C) |
| A (ethylene-propylene random copolymer 3.3-3.6 wt. % ethylene) | 273°F (134°C) |
| B (ethylene=propylene random copolymer 4-8 wt. % ethylene) | 255°F (124°C) |
| C (ethylene-propylene-butene-1 terpolymers, 4-5-1/2 wt.% ethylene 3.5-6 wt. % butene-1) | 250°F (121°C) |
| D (ethylene-propylene random copolymer) | 270°F (132°C) |
| E (ethylene-propylene random copolymer 3.4-4.0 wt. % ethylene) | 270°F (132°C) |
| F (ethylene-propylene random copolymer, 4-6% ethylene) | 255°F (124°C) |

The prepared plastics film structures may be tested by feeding a roll of the film structure into a packaging machine of either the vertical or horizontal type. These machines are equipped with high precision control. During transport through the machine each package is subjected to three heat seal regions which can cause package-to-package stick and drag. The heat seal time is a fraction of a second. The film must maintain a COF at room temperature of between about 0.2-0.3, usually about 0.25 in order to avoid unacceptable drag which would lead to pack jamming and machine down-time. Success of the operation depends on the virtual absence of pack-to-pack stick and drag, a moderate to low force necessary to move the packs through the system and a seal range of at least 40°F (4.4°C), preferably 70° to 90°F (21°C to 32°C) on all seal surfaces.
The following Examples illustrate the invention.

### COMPARATIVE EXAMPLE 1

A polypropylene homopolymer (MFI about 4; DSC melting point about 160°C (71°C)) of high stereoregularity was melted and coextruded with two skin layers which comprised, respectively, a top layer of ethylene-propylene-butene-1 terpolymer containing about 0.3% of silica, as antiblocking agent, and a bottom layer of the terpolymer but containing 1.2% of a fluid silicone and 0.2% of silica, as antiblocking agent. The coextrudate was then quenched to 80° to 110°F (27°C to 43°C); reheated to 240° to 280°F (116°C to 138°C); and stretched 4 to 10 X in the machine direction. The resulting uniaxially oriented film was next oriented in the transverse direction, at an appropriate temperature profile, in a tenter frame.

The resulting film had an overall thickness of 21 microns with the skin layers each being 0.6 microns thick. The film was subsequently treated with corona discharge and was then wound to form a roll.

Such film ran acceptably in both vertical and horizontal packaging systems. It also gave acceptable performace in a Scandia cigarette packaging machine but the resulting packages had poor antistatic behaviour.

### COMPARATIVE EXAMPLE 2

Comparative Example 1 was repeated except that the polypropylene homopolymer contained about 1000 ppm of N,N-bis (2 hydroxyethyl) cocoamine; 1000 ppm of N,N-bis (2-hydroxyethyl) stearylamine; and 500 ppm glycerol monostearate; and that both skin layers were identical in composition, both comprising the fluid silicone.

Tests showed that the heat-sealing capability of the top layer was essentially destroyed; and that the film was unacceptible for vertical, horizontal or Scandia packaging applications.

### COMPARATIVE EXAMPLE 3

Comparative Example 2 was repeated except that both the silica and silicone were omitted from the top layer.

Tests in vertical, horizontal or Scandia packaging systems jammed in less than a minute because of the poor coefficient of friction characteristics of the film.

### EXAMPLE 4

Comparative Example 2 was repeated except that silicone was omitted from the top layer.

Tests in the vertical packaging system ran well at 22 packages per minute. (On newer systems, which can run at higher speeds, up to 70 packages per minute are possible.) On a horizontal packaging system the film ran well at 170 packages per minute. In Scandia cigarette packaging machine the film ran well at 172 packs per minute.

Film samples exhibit a coefficient of friction of 0.25 to 0.30 on top and bottom substrates; good static half life behaviour; and do not register dust pick-up. Packaging could be successfully accomplished with a virtual absence of package to package sticking.

### COMPARATIVE EXAMPLE 5

Example 4 was repeated except that the polypropylene homopolymer contained 1000 ppm of N,N-bis (2-hydroxyethyl) cocoamine only.

Tests showed that the film gives acceptable performance with negligible dust pick-up in vertical, horizontal and Scandia packaging applications.

## Claims

1. A heat-sealable, multi-layer, oriented plastics film structure which comprises:
(a) a core layer comprising a crystalline polyolefin, which includes an antistatic additive, both surfaces of which layer are coated, directly or indirectly, with
(b) at least one heat-sealable layer comprising a polyolefin which is a random copolymer and/or terpolymer and an antiblocking agent wherein only one of the external layers (b) contains silicone oil, part of this silicone oil being transferable to the exposed surface of the other external layer following contact of their surfaces in service, and characterized in that the antistatic additive of core layer (a) comprises a glyceride.

2. A plastics film structure according to claim 1 which comprises a core layer both surfaces of which are directly coated each with one heat-sealable layer.

3. A plastics film structure according to claim 1 or 2 wherein the coating is effected by coextruding the layers.

4. A plastics film structure according to any preceding claim wherein the glyceride comprises glycerol monostearate.

5. A plastics film structure according to any preceding claim wherein the antistatic additive in the core layer further includes a tertiary amine.

6. A plastics film structure according to any preceding claim wherein the random copolymer comprises ethylene and propylene residues and may be the same or different heat-sealable layers.

7. A plastics film structure according to any preceding claim wherein the terpolymer comprises ethylene, propylene and butene-1 residues and may be the same or different in different heat-sealable layers.

8. A plastics film structure according to claim 6 or 7 wherein the copolymer comprises from 2% to 7% by weight of ethylene residues.

9. A plastics film structure according to any preceding claim wherein the antiblocking agent comprises particulate inorganic material of mean particle size from 0.5 to 5.0 microns.

10. A plastics film structure according to any preceding claim wherein the antiblocking agent comprises from 0.05% to 0.5% by weight of each of the heat-sealable layers.

11. A plastics film structure according to any preceding claim wherein one of the external layers (b) comprises from 0.5% to 3.0% of silicone oil.

12. A plastics film structure according to any preceding claim wherein the external layer (b) free from silicone oil is subjected to corona discharge, chemical or flame treatment.

## Patentansprüche

1. Heißsiegelfähige, mehrschichtige, orientierte Kunststoffolienstruktur aus:
(a) einer Kernschicht, enthaltend ein kristallines Polyolefin, das ein Antistatik-Additiv enthält, die beidseitig direkt oder indirekt beschichtet ist mit
(b) mindestens einer heißsiegelfähigen Schicht, enthaltend ein Polyolefin, bei dem es sich um ein statistisches Copolymer und/oder Terpolymer handelt, und ein Antiblockmittel, wobei nur eine der Außenschichten (b) Silikonöl enthält, das nach Kontakt zwischen deren Oberflächen bei Gebrauch teilweise auf die exponierte Oberfläche der anderen Außenschicht übertragbar ist, und dadurch gekennzeichnet, daß das Antistatik-Additiv der Kernschicht (a) ein Glycerid enthält.

2. Kunstoffolienstruktur nach Anspruch 1 mit einer Kernschicht, die beidseitig jeweils direkt mit einer heißsiegelbaren Schicht beschichtet ist.

3. Kunststoffolienstruktur nach Anspruch 1 oder 2, wobei das Beschichten durch Coextrudieren der Schichten erfolgt.

4. Kunststoffolienstruktur nach einem der vorhergehenden Ansprüche, wobei es sich bei dem Glycerid um Glycerinmonostearat handelt.

5. Kunststoffolienstruktur nach einem der vorhergehenden Ansprüche, wobei das Antistatik-Additiv in der Kernschicht außerdem noch ein tertiäres Amin enthält.

6. Kunststoffolienstruktur nach einem der vorhergehenden Ansprüche, wobei das statistische Copolymer Ethylen und Propylen einpolymerisiert enthält und in verschiedenen heißsiegelbaren Schichten gleich oder verschieden sein kann.

7. Kunststoffolienstruktur nach einem der vorhergehenden Ansprüche, wobei das Terpolymer Ethylen, Propylen und Buten-1 einpolymerisiert enthält und in verschiedenen heißsiegelbaren Schichten gleich oder verschieden sein kann.

8. Kunststoffolienstruktur nach Anspruch 6 oder 7, wobei das Copolymer 2 bis 7 Gew.-% Ethylen einpolymerisiert enthält.

9. Kunststoffolienstruktur nach einem der vorhergehenden Ansprüche, wobei das Antiblockmittel teilchenförmiges anorganisches Material mit einer mittleren Teilchengröße von 0,5 bis 5,0 Mikron enthält.

10. Kunststoffolienstruktur nach einem der vorhergehenden Ansprüche, wobei das Antiblockmittel jeweils 0,05 bis 0,5 Gew.-% der heißsiegelbaren Schichten ausmacht.

11. Kunststoffolienstruktur nach einem der vorhergehenden Ansprüche, wobei eine der Außenschichten (b) 0,5 bis 3,0% Silikonöl enthält.

12. Kunststoffolienstruktur nach einem der vorhergehenden Ansprüche, wobei die silikonölfreie Außenschicht (b) einer Koronaentladung oder einer chemischen oder Flammbehandlung unterzogen wird.

## Revendications

1. Structure de film plastique orienté, multicouche, scellable à chaud, qui comprend :
(a) une couche centrale comprenant une polyoléfine cristalline, qui comprend un additif antistatique, les deux faces de cette couche sont enduites, directement ou indirectement, par
(b) au moins une couche scellable à chaud, comprenant une polyoléfine qui est un copolymère statistique et/ou terpolymère et un agent antiblocage, où seule l'une des couches externes (b) contient une huile de silicone, une partie de cette huile de silicone étant transférable sur la face exposée de l'autre couche externe suite au contact de leurs surfaces lors de l'utilisation, et caractérisé en ce que l'additif antistatique de la couche centrale (a) comprend un glycéride.

2. Structure de film plastique suivant la revendication 1, qui comprend une couche centrale dont les deux faces sont chacune, directement enduite d'une couche scellable à chaud.

3. Structure de film plastique suivant la revendication 1 ou 2, dans laquelle le revêtement est réalisé par coextrusion des couches.

4. Structure de film plastique suivant l'une quelconque des revendications précédentes, dans laquelle le glycéride comprend du monostéarate de glycérol.

5. Structure de film plastique suivant l'une quelconque des revendications précédentes, dans laquelle l'additif antistatique dans la couche centrale comprend, en outre, une amine tertiaire.

6. Structure de film plastique suivant l'une quelconque des revendications précédentes, dans laquelle le copolymère statistique comprend des restes éthylène et propylène et peut être identique ou différent dans les différentes couches scellables à chaud.

7. Structure de film plastique suivant l'une quelconque des revendications précédentes, dans laquelle le terpolymère comprend des restes éthylène, propylène et butène-1 et peut être identique ou différent dans les différentes couches scellables à chaud.

8. Structure de film plastique suivant la revendication 6 ou 7, dans laquelle le copolymère comprend 2% à 7% en poids de restes éthylène.

9. Structure de film plastique suivant l'une quelconque des revendications précédentes, dans laquelle l'agent antiblocage comprend un matériau inorganique particulaire de taille moyenne des particules comprise entre 0,5 et 5,0 µm.

10. Structure de film plastique suivant l'une quelconque des revendications précédentes, dans laquelle l'agent antiblocage compose 0,05% à 0,5% en poids de chacune des couches scellables à chaud.

11. Structure de film plastique suivant l'une quelconque des revendications précédentes, dans laquelle l'une des couches externes (b) comprend de 0,5% à 3,0% d'huile de silicone.

12. Structure de film plastique suivant l'une quelconque des revendications précédentes, dans laquelle la couche externe (b) exempte d'huile de silicone est soumise à un traitement par décharge corona, chimique ou de flamme.
